# EUROPÄISCHE PATENTSCHRIFT

(11) **EP 1 607 253 B1**
(45) Veröffentlichungstag und Bekanntmachung des Hinweises auf die Patenterteilung: **09.09.2009**
(21) Anmeldenummer: 04291509.0
(22) Anmeldetag: 15.06.2004
(51) Int. Cl.: B60H 1/00

(54) **Klappenanordnung, insbesondere für eine Kraftfahrzeug-Klimaanlage**
Valve door assembly especially in air conditioning units in vehicles
Montage de valves, particulièrement dans des unités de climatisation de véhicules

(43) Veröffentlichungstag der Anmeldung: 21.12.2005
(73) Patentinhaber: Behr France Rouffach SAS, 68250 Rouffach (FR)
(72) Erfinder: Bohn, Serge, 68230 Turkheim (FR); Monnier, Yves, 68300 Saint Louis (FR); Tschamber, Yvan, 68500 Guebwiller (FR)
(74) Vertreter: Grauel, Andreas

(56) Entgegenhaltungen:
- FR-A- 2 522 591
- US-A- 5 252 084
- US-A- 6 015 340

## Beschreibung

Die Erfindung betrifft eine Klappenanordnung, insbesondere für eine Kraftfahrzeug-Klimaanlage, gemäß dem Oberbegriff des Anspruchs 1.

Klappen weisen herkömmlicher Weise zwei in der Schwenkachse angeordnete Zapfen auf, welche in geschlossenen, d.h. hohlzylindrisch, ausgebildeten Lagern aufgenommen sind, die in einem Luftführungs-Gehäuse ausgebildet sind. Für den Einbau der Klappen werden dieselben derart elastisch verformt, dass sie in die Lagerbuchsen in Längsrichtung der Schwenkachse eingesteckt werden können. Ist zur Betätigung ein Hebel oder ein Zahnrad erforderlich, das außerhalb des Gehäuses angeordnet ist, so muss dieses nach erfolgtem Einbau auf den über das Gehäuse hinausragenden Zapfen gesteckt oder auf andere Weise befestigt werden.

Die US 60 15 340 offenbart eine Klappe, die mit ihren Zapfen in einen L-förmigen Schlitz eingesetzt werden kann und mit einem Gehäuseteil verriegelt wird.

Es ist Aufgabe der Erfindung, eine verbesserte Klappenanordnung zur Verfügung zu stellen.

Diese Aufgabe wird gelöst durch eine Klappenanordnung mit den Merkmalen des Anspruchs 1. Vorteilhafte Ausgestaltungen sind Gegenstand der Unteransprüche.

Erfindungsgemäß ist eine Klappenanordnung vorgesehen, die zumindest ein Lager mit einer Öffnung aufweist, die eine seitliche Montage quer zur Schwenkachse ermöglicht. Dadurch, dass die Montage der Klappe in seitlicher Richtung ohne ein Zusammendrücken der Klappe, insbesondere ohne eine wesentliche elastische Verformung derselben in Richtung der Schwenkachse, erfolgt, besteht kein Risiko einer plastischen Verformung, so dass die Klappe ihre optimale Form hat und ihre Funktion vollständig erfüllen kann. Für den Einbau erfolgt eine kurzzeitige elastische Verformung des Lagers, wobei das Lager sich nach dem Einbau der Klappe zurückverformt. Das andere Lager ist bevorzugt auf herkömmliche Weise, d.h. als zylinderförmige Aufnahme, ausgebildet, so dass zuerst der eine Zapfen in die Aufnahmeöffnung eingesteckt und anschließend der andere Zapfen durch die Öffnung in das zweite Lager seitlich eingeschoben wird. Dies ermöglicht eine schnellere und einfachere Montage als bei herkömmlichen Klappenanordnungen.

Die Öffnung weist bevorzugt einen Winkel von weniger als 180° und mindestens 90° auf, insbesondere im unteren Bereich hiervon, so dass eine sichere Funktionserfüllung der Klappe möglich ist. Dabei ist die Öffnung bevorzugt derart angeordnet, dass bei normalem Betrieb keine größeren Kräfte in Richtung der Öffnung wirken.

Am durch das Lager gelagerten Zapfen ist vorzugsweise einstückig eine Betätigungsvorrichtung, insbesondere ein Zahnrad und/oder ein Hebel, angeordnet. Dies ermöglicht eine einfache einstückige Herstellung der Klappe mittels Kunststoff-Spritzgießens. In Folge der einstückigen Ausgestaltung entfällt das bisher erforderliche Aufstecken der Betätigungsvorrichtung und die Anzahl der Teile wird reduziert, so dass sich die Montage weiter vereinfacht und die Herstellungskosten gesenkt werden können.

Im Folgenden wird die Erfindung anhand eines Ausführungsbeispiels unter Bezugnahme auf die Zeichnung im Einzelnen erläutert. Es zeigen:

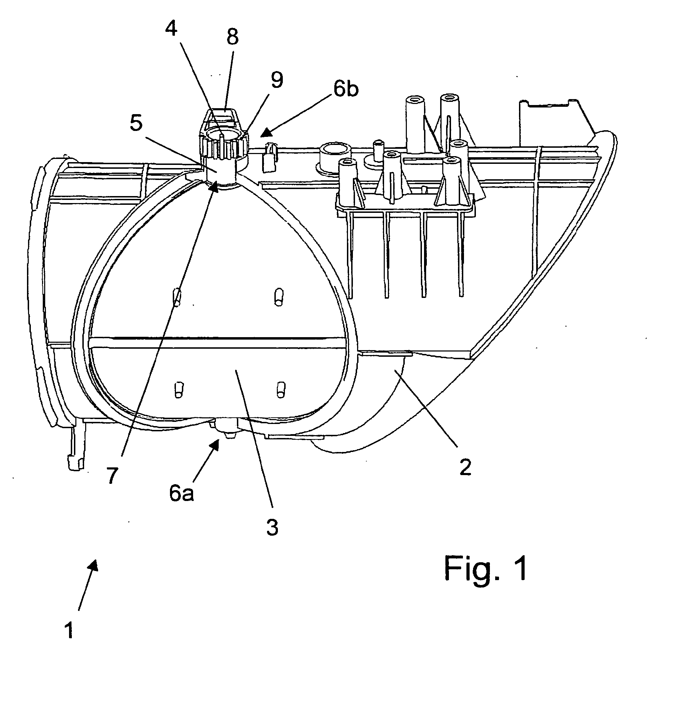

- Fig. 1: eine Ansicht einer erfindungsgemäßen Klappenanordnung, und

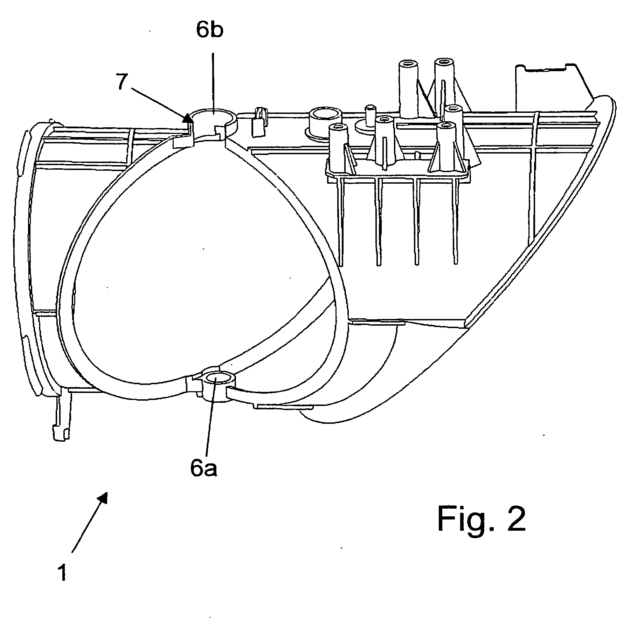

- Fig. 2: die Ansicht von Fig. 1 ohne Klappe.

Eine Klappenanordnung 1 einer Kraftfahrzeug-Klimaanlage, welche in einem Lufteintritts-Gehäuse 2 angeordnet ist, umfasst eine Klappe 3. Diese Klappe 3 ist um eine Schwenkachse 4 verschenkbar, wofür an zwei gegenüberliegenden Enden der Klappe 3 Zapfen 5 ausgebildet sind, die in am Gehäuse 2 ausgebildeten Lagern 6a und 6b aufgenommen sind.

Hierbei ist das in den Figuren unten dargestellte, erste Lager 6a als herkömmliches Lager ausgebildet, das heißt es hat eine zylinderförmige Aufnahmeöffnung zur Aufnahme des unteren Zapfens 5.

Das in den Figuren oben dargestellte, zweite Lager 6b ist ebenfalls mit einer zylinderförmigen Aufnahmeöffnung versehen, die jedoch auf einer Seite eine in Richtung der Schwenkachse 4 durchgehende Öffnung 7 aufweist, wobei die Öffnung 7 einen Winkel von weniger als 180° einnimmt, so dass bei einer elastischen Verformung des Lagers 6b der obere Zapfen 5 seitlich durch die Öffnung 7 eingeschoben werden kann, jedoch ausreichend sicher im Lager 6b gehalten wird.

Am über das Lager 6b hinausragenden Ende des oberen Zapfens 5 sind zur Betätigung der Klappe 3 ein Hebel 8 und ein Zahnrad 9 einstückig ausgebildet.

### Bezugszeichenliste

- 1: Klappenanordnung
- 2: Gehäuse
- 3: Klappe
- 4: Schwenkachse
- 5: Zapfen
- 6a, 6b: Lager
- 7: Öffnung
- 8: Hebel
- 9: Zahnrad

## Patentansprüche

1. Klappenanordnung mit einer um eine Schwenkachse (4) verschwenkbaren Klappe (3), welche zwei Zapfen (5) aufweist, welche in Lagern (6a, 6b) gelagert sind und zumindest eines der Lager (6b) eine Öffnung (7) aufweist, die eine seitliche Montage quer zur Schwenkachse (4) ermöglicht, **dadurch gekennzeichnet, dass** die Öffnung (7) einen Winkel von weniger als 180° und mindestens 90° des Lagers (6b) aufweist.

2. Klappenanordnung nach Anspruch 1, **dadurch gekennzeichnet, dass** bei der Montage eine kurzzeitige elastische Verformung des Lagers (6b) erfolgt.

3. Klappenanordnung nach einem der vorhergehenden Ansprüche, **dadurch gekennzeichnet, dass** am durch das Lager (6b) gelagerten Zapfen (5) eine Betätigungsvorrichtung angeordnet ist.

4. Klappenanordnung nach Anspruch 3, **dadurch gekennzeichnet, dass** die Betätigungsvorrichtung einstückig mit der Klappe (3) ausgebildet ist.

5. Klappenanordnung nach Anspruch 3 oder 4, **dadurch gekennzeichnet, dass** die Betätigungsvorrichtung ein Zahnrad (9) und/oder einen Hebel (8) aufweist.

6. Klappenanordnung nach einem der vorhergehenden Ansprüche, **dadurch gekennzeichnet, dass** das zweite Lager (6a) eine zylinderförmige Aufnahmeöffnung aufweist.

7. Klappenanordnung nach einem der vorhergehenden Ansprüche, **dadurch gekennzeichnet, dass** die Klappe (3) ein Kunststoff-Spritzgussteil ist.

## Claims

1. Valve assembly with a flap (3) that can pivot about a pivot axle (4), which comprises two pins that fit into bearings (6a, 6b), at least one of the said bearings (6b) having an opening (7) that enables assembly from the side, transversely to the pivot axle (4), **characterised in that** the opening (7) extends over an angle of less than 180° and at least 90° of the bearing (6b).

2. Valve assembly according to Claim 1, **characterised in that** a brief elastic deformation of the bearing (6b) takes place during assembly.

3. Valve assembly according to either of the preceding claims, **characterised in that** an actuating device is arranged on the pin (5) mounted in the bearing (6b).

4. Valve assembly according to Claim 3, **characterised in that** the actuating device is made integrally with the flap (3).

5. Valve assembly according to Claims 3 or 4, **characterised in that** the actuating device comprises a gearwheel (9) and/or a lever (8).

6. Valve assembly according to any of the preceding claims, **characterised in that** the second bearing (6a) has a cylindrical receiving opening.

7. Valve assembly according to any of the preceding claims, **characterised in that** the flap (3) is an injection-moulded plastic component.

## Revendications

1. Agencement de volets comprenant un volet (3) pouvant pivoter autour d'un axe de pivotement (4), volet qui présente deux pivots (5) qui sont montés dans des supports de montage (6a, 6b), et au moins l'un des supports de montage (6b) présente une ouverture (7) qui permet un montage latéral, transversalement par rapport à l'axe de pivotement (4),
**caractérisé en ce que** l'ouverture (7) présente un angle de moins de 180° et d'au moins 90° par rapport au support de montage (6b).

2. Agencement de volets selon la revendication 1, **caractérisé en ce que**, lors du montage, il se produit une brève déformation élastique du support de montage (6b).

3. Agencement de volets selon l'une ou l'autre des revendications précédentes, **caractérisé en ce qu'**un dispositif d'actionnement est disposé au niveau du pivot (5) monté dans le support de montage (6b).

4. Agencement de volets selon la revendication 3, **caractérisé en ce que** le dispositif d'actionnement est configuré en formant une seule et même pièce avec le volet (3).

5. Agencement de volets selon la revendication 3 ou 4, **caractérisé en ce que** le dispositif d'actionnement présente une roue dentée (9) et / ou un levier (8).

6. Agencement de volets selon l'une quelconque des revendications précédentes, **caractérisé en ce que** le deuxième support de montage (6a) présente une ouverture de logement de forme cylindrique.

7. Agencement de volets selon l'une quelconque des revendications précédentes, **caractérisé en ce que** le volet (3) est une pièce en matière plastique moulée par injection.
